# FASCICULE DE BREVET EUROPEEN

(11) **EP 1 340 103 B1**
(45) Date de publication et mention de la délivrance du brevet: **04.07.2007**
(21) Numéro de dépôt: 01999835.0
(22) Date de dépôt: 05.12.2001
(51) Int. Cl.: G01V 8/10, G06T 7/20

(54) **PROCEDE POUR DETECTER DES CORPS NOUVEAUX DANS UNE SCENE ECLAIREE**
METHODE ZUM ENTDECKEN NEUER KÖRPER IN EINER BELEUCHTETEN UMGEBUNG
METHOD FOR DETECTING NEW OBJECTS IN AN ILLUMINATED SCENE

(30) Priorité: 06.12.2000 FR 0015805; 06.12.2000 FR 0015803
(43) Date de publication de la demande: 03.09.2003
(73) Titulaire: Poseidon, 92100 Boulogne Billancourt (FR)
(72) Inventeur: MENIERE, Jérôme, F-75017 Paris (FR); LEFEBURE, Martin, F-92400 Coubevoie (FR); GUICHARD, Frédéric, F-75012 Paris (FR); BELAHMIDI, Abdelmounim, F-92700 COLOMBES (FR)
(74) Mandataire: Grynwald, Albert
(86) Numéro de dépôt international: PCT/FR2001/003840
(87) Numéro de publication internationale: WO 2002/046795

(56) Documents cités:
- FR-A- 2 763 459
- US-A- 4 779 095
- US-A- 5 684 898

## Description

Le problème posé est celui de la détection des corps nouveaux dans une scène éclairée par des lumières non forcément contraintes, c'est à dire produites par un éclairage artificiel ou naturel, et observée par l'intermédiaire d'au moins un capteur capable de fournir une succession d'images, par exemple une caméra vidéo. La présente invention résout ce problème.

A la connaissance des inventeurs, l'art antérieur n'apporte pas de solution complète ou satisfaisante à ce problème.

La méthode classique, de détection de corps à partir d'une seule caméra consiste en la formation d'une image de référence construite grâce à une moyenne des images acquises sur une longue durée. La détection des corps est réalisée en appliquant un seuil à la différence entre la dernière image et l'image de référence. Toute grande différence indique la présence d'un corps.

Cette méthode classique ne s'applique pas dans le cas de scènes éclairées par des lumières non contraintes, pour deux raisons principales. La première est que du fait que l'on ne maîtrise pas les conditions d'illumination, tout changement de lumière induit un changement dans les images et donc induit des détections qui ne correspondent pas à des corps nouveaux. La deuxième est que cette méthode détectera aussi des ombres ou des taches de lumière comme des corps nouveaux.

La demande brevet déposée le 21 décembre 1999 par Poséidon pour un "Procédé et système pour détecter un objet devant un fond" sous le n° 99/16124 et publiée le 22 juin 2001 sous le numéro FR2802653, ci-après dénommée technologie Kernel4, décrit un procédé et un système fondé sur un principe stéréoscopique. Il permet d'effectuer la détection des corps, indépendamment des conditions d'illumination et en discriminant les phénomènes d'ombre des corps réels. Cependant sa mise en oeuvre nécessite l'utilisation d'au moins deux caméras.

A titre d'état antérieur de la technique, on cite aussi les brevets US 4,779,095, FR 2763459 et US 5,684,898.

Le brevet US 4,779,095 décrit une méthode et un système pouvant détecter la présence d'un corps dans une scène éclairée par un éclairage naturel. La méthode comprend la formation d'images successives numérisées. En calculant la différence des valeurs de pixels correspondant entre les images successives, la présence d'objets dans la scène peut être détectée.

### Définitions

Les définitions, ci-après explicitées, des termes techniques employées sont illustrées par des exemples se référant aux figures 1a, 1b, 1c, 2a, 2b, 2c, 3a, 3b, 4a, 4b et 5. Ces figures représentent une image composée d'un pavage de pixels sur lesquels on a indiqué leur valeur.

### Image, Pavage, Pixel, Valeur de pixel

On appelle pixel : une zone élémentaire d'une image obtenue en créant un pavage, généralement régulier, de ladite image. Lorsque l'image provient d'un capteur tel qu'une caméra vidéo, ou une caméra thermique ou acoustique, on peut généralement associer une valeur à ce pixel : la couleur ou le niveau de gris pour une image vidéo, la température pour une caméra thermique.

### Exemple :

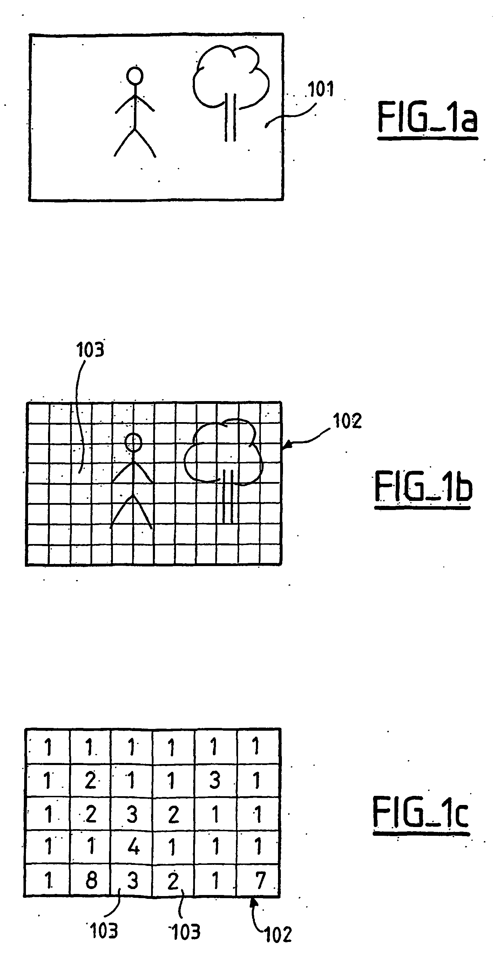

On a représenté sur la figure 1a une image 101 (symbolisée par un homme et un arbre). Sur la figure 1b, on a superposé à cette image un pavage 102 de pixels 103. On a représenté sur la figure 1c un pavage sur lequel on a indiqué les valeurs des pixels.

### Pixels adjacents

Deux pixels du pavage sont dits adjacents si leurs bords ou leurs coins se touchent.

### Chemin sur pavage

Un chemin sur le pavage est un ensemble ordonné et fini de pixels où chaque pixel est adjacent à son suivant (au sens de l'ordonnancement). La taille d'un chemin est donnée par le nombre de pixels le constituant.

### Pixels jointifs

Deux pixels sont dits jointifs lorsque le chemin le plus court débutant à l'un et finissant à l'autre est de taille inférieure à un nombre déterminé de pixels.

### Ensemble connexe de pixels

Un ensemble de pixels est dit connexe si pour chaque paire de pixels de l'ensemble, il existe un chemin débutant à l'un et finissant à l'autre, ce chemin étant constitué de pixels de l'ensemble.

### Exemple :

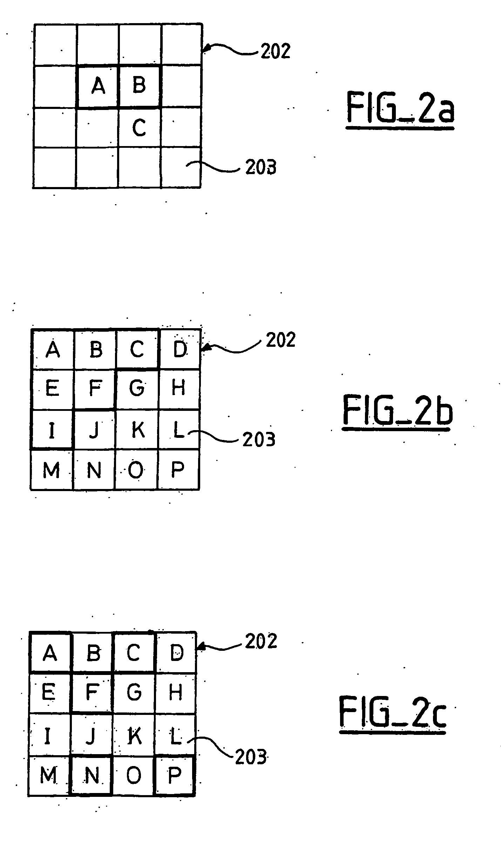

La figure 2a représente un pavage 202 de 16 pixels 203, parmi lesquels on a mis en évidence 3 pixels, dénommés A, B et C. On peut remarquer que les pixels A et B sont adjacents et que les pixels B et C sont adjacents. Il existe donc un chemin (A->B->C) qui relie ces pixels. L'ensemble de pixels {A, B, C} est donc connexe.

Sur la figure 2b, on a également représenté un pavage 202 de 16 pixels 203, désignés par les lettres A à P. Si on sélectionne l'ensemble de pixels {A, B, C, E, F, I}, on peut constater que les pixels A et B sont adjacents, que les pixels B et C sont adjacents, etc. I1 existe donc des chemins : A -> B -> C et C-> B -> F -> E -> I. Chaque couple de pixel de l'ensemble est relié par un chemin de pixels appartenant à l'ensemble, l'ensemble de pixels {A, B, C, E, F, I} est par conséquent connexe.

Sur la figure 2c, on a représenté le même pavage 202 que sur la figure 2b, en sélectionnant l'ensemble de pixels {A, C, F, N, P}. Il existe un chemin : A->C->F qui relie les pixels A, C et F, mais il n'existe pas de chemin de pixels appartenant à l'ensemble reliant N et P, ou bien N à A. L'ensemble de pixels {A, C, F, N, P} n'est pas connexe. Par contre, l'ensemble {A, C, F} est connexe.

### Pixel adjacent à un ensemble

Un pixel n'appartenant pas à un ensemble est dit adjacent audit ensemble lorsqu'il est jointif à au moins un pixel appartenant audit ensemble

### Calotte

On appelle calotte sup. (resp. inf.) : un ensemble connexe de pixels dont les valeurs sont supérieures (resp. inférieures) à une valeur prédéterminée et vérifiant la condition suivante :
les valeurs des pixels adjacents à l'ensemble (non compris dans l'ensemble) sont inférieures ou égales (respectivement. supérieures ou égales) à ladite valeur prédéterminée,
de sorte que les valeurs des pixels situés dans ledit ensemble sont supérieures (respectivement inférieures) aux valeurs des pixels adjacents à l'ensemble.

On appelle calotte une calotte sup. ou une calotte inf.

### Niveau d'une calotte

On appelle niveau d'une calotte ladite valeur prédéterminée.

### Exemple :

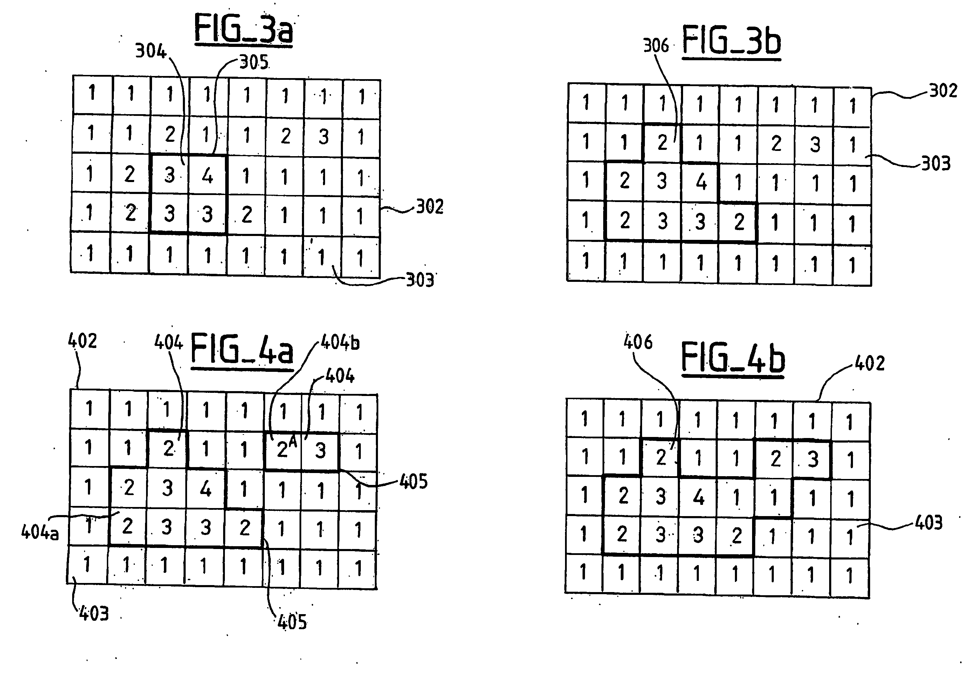

Les figures 3a, 3b, 3c et 3d représentent des images composées de pavages 302 de pixels 303 sur lesquels on a indiqué leurs valeurs.

La figure 3a représente (à l'intérieur 304 du trait fort 305) un ensemble de 4 pixels. Cet ensemble a les propriétés suivantes :
- il est connexe au sens de la définition donnée,
- les valeurs de tous les pixels de l'ensemble sont supérieures à 1,
- les (douze) pixels adjacents à l'ensemble ont pour certains une valeur supérieure à 1.

L'ensemble de pixels considéré n'est donc pas une calotte sup. de niveau 1.

Par contre, cet ensemble de pixel a les propriétés suivantes :
- il est connexe au sens de la définition donnée,
- les valeurs de tous les pixels de l'ensemble sont supérieures à 2,
- les (douze) pixels jointifs à l'ensemble ont tous une valeur inférieure ou égale à 2.

Cette ensemble de pixel est donc une calotte sup. de niveau 2.

La figure 3b représente un ensemble 306 de huit pixels présentant les propriétés suivantes :
- il est connexe au sens de la définition donnée,
- les valeurs de tous les pixels de l'ensemble sont supérieures à 1,
- les (dix-huit) pixels jointifs à l'ensemble ont tous une valeur inférieure ou égale à 1.

L'ensemble de pixels considéré est donc une calotte sup. de niveau 1.

La figure 4a représente un pavage 402 de pixels 403. Dans ce pavage 402 on a isolé par un trait fort 405 un ensemble 404 de dix pixels répartis en deux zones 404 a et 404b. Cet ensemble de pixel 404 présente les propriétés suivantes :
- il n'est pas connexe au sens de la définition donnée,
- les valeurs de tous les pixels sont supérieures à 1
- les (vingt-cinq) pixels jointifs à l'ensemble ont tous une valeur inférieure ou égale à 1.

### Les dix pixels de cet ensemble non connexe ne constituent donc pas une calotte sup. de niveau 1.

La figure 4b représente un ensemble 406 de douze pixels présentant les propriétés suivantes :
- il est connexe au sens de la définition donnée,
- les valeurs des pixels ne sont pas toutes supérieures à 1,
- les (vingt-quatre) pixels jointifs à l'ensemble ont tous une valeur inférieure ou égale à 1.

L'ensemble de pixels considéré n'est donc pas une calotte sup. de niveau 1.

### Caractéristique(s) associée(s) à une calotte

On appelle caractéristique(s) associée(s) à une calotte : une ou des valeurs obtenues par des opérations arithmétiques et/ou logiques prédéfinies à partir des valeurs des pixels de la calotte, et/ou des positions des pixels dans le pavage, et/ou du niveau de la calotte.

Par exemple, une opération arithmétique pourrait consister à utiliser la somme des écarts entre la valeur de chaque pixel de la calotte et le niveau de la calotte, ou encore la taille (nombre de pixels) de ladite calotte.

### Calotte réalisée

On appelle calotte réalisée : une calotte dont les caractéristiques associées sont dans une plage de valeur déterminée.

### Primitive associée à un pixel

On appelle primitive associée à un pixel : une valeur binaire (c'est-à-dire 0 ou 1) ou une valeur booléenne (c'est-à-dire vraie ou fausse, dans ce cas on conviendra que vraie correspond à 1 et faux correspond à 0) obtenue par des opérations arithmétiques et/ou logiques prédéfinies à partir de la valeur dudit pixel et de celles des pixels qui lui sont jointifs.

### Exemple :

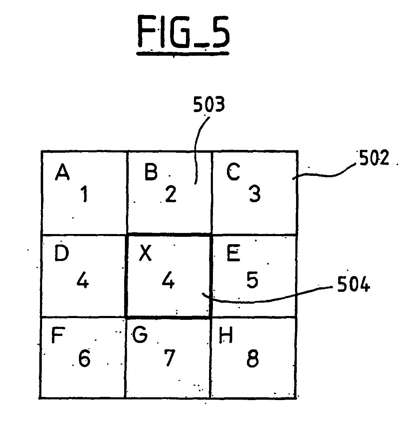

Sur la figure 5 on a représenté un pavage 502 de neuf pixels 503. L'un d'entre eux X dont la valeur est 4 et référencé 504. Ce pixel 504 est entouré des pixels A, B, C, D, E, F, G et H dont les valeurs respectives sont 1, 2, 3, 4, 5, 6, 7 et 8.

Si, pour la définition des pixels jointifs, on choisit 2 comme longueur maximale du chemin, on peut associer au pixel 504 les primitives Pa, Pb, Pc, Pd, Pe, Pf, Pg, et Ph suivantes :

Pa : => résultat logique du test : la valeur de X est supérieure à la valeur de A.

Pb : => résultat logique du test : la valeur de X est supérieure à la valeur de B.

Et ainsi de suite pour C, D, E, F, G, H

On obtient les primitives Pa, Pb, Pc, Pd, Pe, Pf, Pg et Ph dont les valeurs possibles sont "vrai" et "faux", qu'on peut encore écrire respectivement 1 et 0.

### Primitive réalisée

On dira qu'une primitive est réalisée si sa valeur est égale à 1.

On obtient, dans le cas l'exemple précédent décrit, le tableau suivant :
Pa : faux ⇔ 0 : la primitive n'est pas réalisée
Pb : faux ⇔ 0 : la primitive n'est pas réalisée
Pc : faux ⇔ 0 : la primitive n'est pas réalisée
Pd : faux ⇔ 0 : la primitive n'est pas réalisée
Pe : vrai ⇔ 1 : la primitive est réalisée
Pf : vrai ⇔ 1 : la primitive est réalisée
Pg : vrai ⇔ 1 : la primitive est réalisée
Ph: vrai ⇔ 1 : la primitive est réalisée

### Les concepts inventifs selon l'invention

La présente invention concerne un procédé pour détecter des corps nouveaux dans une scène éclairée par des lumières non forcément contraintes et observée par l'intermédiaire d'au moins un capteur capable de fournir une succession d'images, par exemple une caméra vidéo. Au sens de la présente invention, par lumières non forcément contraintes on entend : des lumières produites par un éclairage artificiel ou un éclairage naturel. Le procédé selon l'invention comprend plusieurs étapes. Il comprend :
- l'étape de détecter et de produire sous forme de signaux électriques, lesdites images, à des instants successifs,
- l'étape de numériser les signaux électriques obtenus et de produire des données numériques d'images, notamment des pixels, à des instants successifs,
- l'étape d'estimer la nature d'un corps (1), la trajectoire et des changements d'attitude du corps (1) ;
ladite étape pour estimer la nature d'un corps (1), la trajectoire et des changements d'attitude du corps (1) comportant l'étape d'extraire de chacune desdites images successives des primitives et/ou des calottes en distinguant les calottes de type inférieur et les calottes de type supérieur telles que définies dans la description peu sensibles aux conditions d'illumination et propres à être utilisées pour une discrimination entre taches de lumières et corps (1).

### Branche 1 :

De préférence, dans le cas où l'étape pour estimer la nature d'un corps, la trajectoire et des changements d'attitude du corps comprend l'étape d'extraire des images successives des primitives, ledit procédé comprend :
- l'étape d'associer à chaque pixel une ou des primitives telles que définies dans la description ;
- l'étape de compter, à intervalles de temps réguliers dt sur une période de temps T1, pour chaque pixel et pour chacune des primitives associées audit pixel, le nombre de fois N1 où chaque primitive est réalisée ;
si le nombre de fois N1 où une primitive est réalisée est supérieur à un seuil S1, on dit que ladite primitive est habituellement réalisée pendant la période de temps T1, dans le cas contraire on dit que ladite primitive n'est pas habituellement réalisée pendant la période de temps T1 ;
ledit procédé comprenant en outre :
- l'étape de compter, à intervalles de temps réguliers dt pendant une période de temps T2 choisie inférieure à T1, pour chaque pixel et pour chacune des primitives associées audit pixel, le nombre de fois N2 où chaque primitive est réalisée ;
si le nombre de fois N2 où ladite primitive est réalisée est supérieur à un seuil S2, on dit que ladite primitive est habituellement réalisée pendant la période de temps T2, dans le cas contraire on dit que ladite primitive n'est pas habituellement réalisée pendant la période de temps T2 ;
ledit procédé comprenant en outre :
- l'étape de déterminer si un changement est survenu sur une primitive associée à un pixel en appliquant l'un ou l'autre des critères suivant :
   - ladite primitive est habituellement réalisée pendant la période de temps T1 et n'est pas habituellement réalisée pendant la période de temps T2,
   - ladite primitive est habituellement réalisée pendant la période de temps T2 et n'est pas habituellement réalisée pendant la période de temps T1 ;
ledit procédé comprenant en outre :
- l'étape de compter, pour chaque pixel, le nombre de changements N3 des primitives associées audit pixel ;
si le nombre de changements N3 est supérieur à un seuil S3, notamment égal à la moitié du nombre de primitives associées audit pixel, on dit qu'un changement est survenu sur ledit pixel ;
ledit procédé comprenant en outre :
- l'étape de détecter si un corps (1) nouveau est apparu en déterminant si un changement est survenu sur un ensemble connexe de pixels.

Avantageusement, le procédé selon l'invention comprend en outre l'étape de déclencher des moyens d'alarme en cas de trajectoire ou de mouvement prédéterminé dudit corps.

### Branche 2

De préférence, dans le cas où l'étape pour estimer la nature d'un corps, la trajectoire et des changements d'attitude du corps comprend l'étape d'extraire des images successives de calottes, ledit procédé comprend :
- l'étape d'associer auxdites calottes une ou plusieurs caractéristiques,
- l'étape de sélectionner les calottes dont les caractéristiques sont supérieures à un seuil,
- l'étape de compter pour chaque pixel, à intervalles de temps réguliers dt pendant une période de temps T1, le nombre de fois N1 où ledit pixel appartient à ladite calotte sélectionnée ;
si le nombre de fois N1 où ledit pixel appartient à ladite calotte nombre est supérieur à un seuil S1, on dit que ledit pixel est habituellement présent pendant la période de temps T1, dans le cas contraire on dit que ledit pixel n'est pas habituellement présent pendant la période de temps T1 ;
ledit procédé comprenant en outre :
- l'étape de compter, à intervalles de temps réguliers dt pendant une période de temps T2 choisie inférieure à T1, pour chaque pixel, le nombre de fois N2 où ledit pixel appartient à ladite calotte sélectionnée ;
si le nombre de fois N2 où ledit pixel appartient à ladite calotte est supérieur à un seuil S2, on dit que ledit pixel est habituellement présent pendant la période de temps T2, dans le cas contraire on dit que ledit pixel n'est pas habituellement présent pendant la période de temps T2 ;
- l'étape de déterminer si un changement est survenu sur un pixel en appliquant l'un ou l'autre des critères suivant :
   - ledit pixel est habituellement présent pendant la période de temps T1 et n'est pas habituellement présent pendant la période de temps T2,
   - ledit pixel est habituellement présent pendant la période de temps T2 et n'est pas habituellement présent pendant la période de temps T1 ;
ledit procédé comprenant en outre :
- l'étape de détecter si un corps (1) nouveau est apparu en détectant si un changement est survenu sur un ensemble connexe de pixels.

Avantageusement, le procédé comprend en outre l'étape de déclencher des moyens d'alarme en cas de trajectoire ou de mouvement prédéterminé dudit corps.

### Système

La présente invention concerne également un système pour détecter des corps nouveaux dans une scène éclairée par des lumières non forcément contraintes et observée par l'intermédiaire d'au moins un capteur capable de fournir une succession d'images, par exemple une caméra vidéo. Au sens de la présente invention, par lumière non forcément contraintes on entend : des lumières produites par un éclairage artificiel ou un éclairage naturel.

Le système selon l'invention comprend :
- des moyens de détections, notamment une caméra vidéo (4), pour détecter et pour produire sous forme de signaux électriques, lesdites images, à des instants successifs,
- des moyens de numérisation (6) des signaux électriques obtenus pour produire des données numériques d'images, notamment des pixels, à des instants successifs,
- des moyens d'estimation (7, 7a, 7b) de la nature d'un corps (1), de la trajectoire et des changements d'attitude du corps (1) ;
lesdits moyens d'estimation (7, 7a, 7b) de la nature d'un corps (1), de la trajectoire et des changements d'attitude du corps (1) comportant des moyens de traitement informatiques (7, 7a, 7b) pour extraire de chacune desdites images successives des primitives et/ou des calottes en distinguant les calottes de type inférieur et les calottes de type supérieur telles que définies dans la description peu sensibles aux conditions d'illumination et propres à être utilisées pour une discrimination entre taches de lumières et corps (1).

### Branche 1

De préférence, dans le cas où les moyens d'estimation de la nature d'un corps, de la trajectoire et des changements d'attitude du corps comprend des moyens pour extraire des images successives des primitives, le système comprend :
- des moyens d'association (701) pour associer à chaque pixel une ou des primitives telles que définies dans la description ;
- des premiers moyens de comptage (702) pour compter, à intervalles de temps réguliers dt sur une période de temps T1, pour chaque pixel et pour chacune des primitives associées audit pixel, le nombre de fois N1 où chaque primitive est réalisée ;
si le nombre de fois N1 où une primitive est réalisée est supérieur à un seuil S1, on dit que ladite primitive est habituellement réalisée pendant la période de temps T1, dans le cas contraire on dit que ladite primitive n'est pas habituellement réalisée pendant la période de temps T1 ; ledit système comprenant en outre :
- des seconds moyens de comptage (703) pour compter, à intervalles de temps réguliers dt pendant une période de temps T2 choisie inférieure à T1, pour chaque pixel et pour chacune des primitives associées audit pixel, le nombre de fois N2 où chaque primitive est réalisée ;
si le nombre de fois N2 où ladite primitive est réalisée est supérieur à un seuil S2, on dit que ladite primitive est habituellement réalisée pendant la période de temps T2, dans le cas contraire on dit que ladite primitive n'est pas habituellement réalisée pendant la période de temps T2 ;
ledit système comprenant en outre :
- des moyens de discrimination (708) pour déterminer si un changement est survenu sur une primitive associée à un pixel en appliquant l'un ou l'autre des critères suivants:
   - ladite primitive est habituellement réalisée pendant la période de temps T1 et n'est pas habituellement réalisée pendant la période de temps T2,
   - ladite primitive est habituellement réalisée pendant la période de temps T2 et n'est pas habituellement réalisée pendant la période de temps T1 ;
ledit système comprenant en outre :
- des troisièmes moyens de comptage (705) pour compter, pour chaque pixel, le nombre de changements N3 des primitives associées audit pixel ;
si le nombre de changements N3 est supérieur à un seuil S3, notamment égal à la moitié du nombre de primitives associées audit pixel, on dit qu'un changement est survenu sur ledit pixel ; ledit système comprenant en outre :
- des moyens de détection (706) pour détecter si un corps (1) nouveau est apparu en déterminant si un changement est survenu sur un ensemble connexe de pixels.

Avantageusement, dans le cas de cette première variante de réalisation (branche 1) le système comprend en outre des moyens d'alarme pour déclencher un signal d'alarme en cas de trajectoire ou de mouvement suspect dudit corps.

### Branche 2 :

De préférence, dans le cas où les moyens d'estimation de la nature d'un corps, de la trajectoire et des changements d'attitude du corps comprend des moyens pour extraire des images successives des calottes, le système comprend :
- des moyens d'association pour associer auxdites calottes une ou plusieurs caractéristiques,
- des moyens de sélection pour sélectionner les calottes dont les caractéristiques sont supérieures à un seuil,
- des quatrièmes moyens de comptage pour compter pour chaque pixel, à intervalles de temps réguliers dt pendant une période de temps T1, le nombre de fois N1 où ledit pixel appartient à ladite calotte sélectionnée,
si le nombre de fois N1 où ledit pixel appartient à ladite calotte est supérieur à un seuil S1, on dit que ledit pixel est habituellement présent pendant la période de temps T1, dans le cas contraire on dit que ledit pixel n'est pas habituellement présent pendant la période de temps T1,
ledit système comprenant en outre:
- des cinquièmes moyens de comptage (702, 703, 705) pour compter, à intervalles de temps réguliers dt pendant une période de temps T2 choisie inférieure à T1, pour chaque pixel, le nombre de fois N2 où ledit pixel appartient à ladite calotte sélectionnée ;
si le nombre de fois N2 où ledit pixel appartient à ladite calotte est supérieur à un seuil S2, on dit que ledit pixel est habituellement présent pendant la période de temps T2, dans le cas contraire on dit que ledit pixel n'est pas habituellement présent pendant la période de temps T2 ;
ledit système comprenant en outre :
- des moyens de discrimination (708) pour déterminer si un changement est survenu sur un pixel en appliquant l'un ou l'autre des critères suivants:
   - ledit pixel est habituellement présent pendant la période de temps T1 et n'est pas habituellement présent pendant la période de temps T2,
   - ledit pixel est habituellement présent pendant la période de temps T2 et n'est pas habituellement présent pendant la période de temps T1 ;
ledit système comprenant en outre :
- des moyens de détection (706) pour détecter si un corps (1) nouveau est apparu en détectant si un changement est survenu sur un ensemble connexe de pixels.

Avantageusement, le système comprend en outre des moyens d'alarme pour déclencher un signal d'alarme en cas de trajectoire ou de mouvement suspect dudit corps.

### Description détaillée de figures

D'autres caractéristiques et avantages de l'invention apparaîtront à la lecture de la description de variantes de réalisation de l'invention, données à titre d'exemple indicatif et non limitatif, et de:

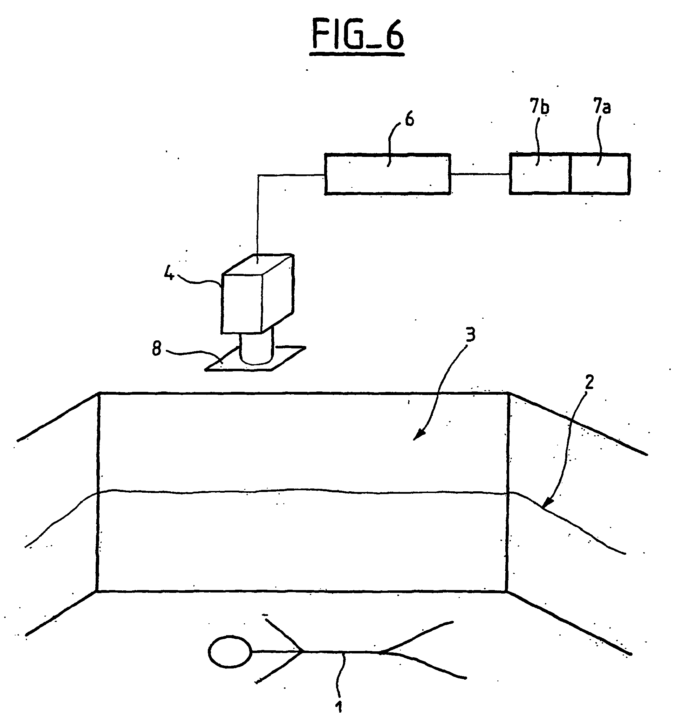

- la figure 6 qui représente une vue générale du système qui permet la détection de corps en mettant en oeuvre ie procédé selon la présente demande,

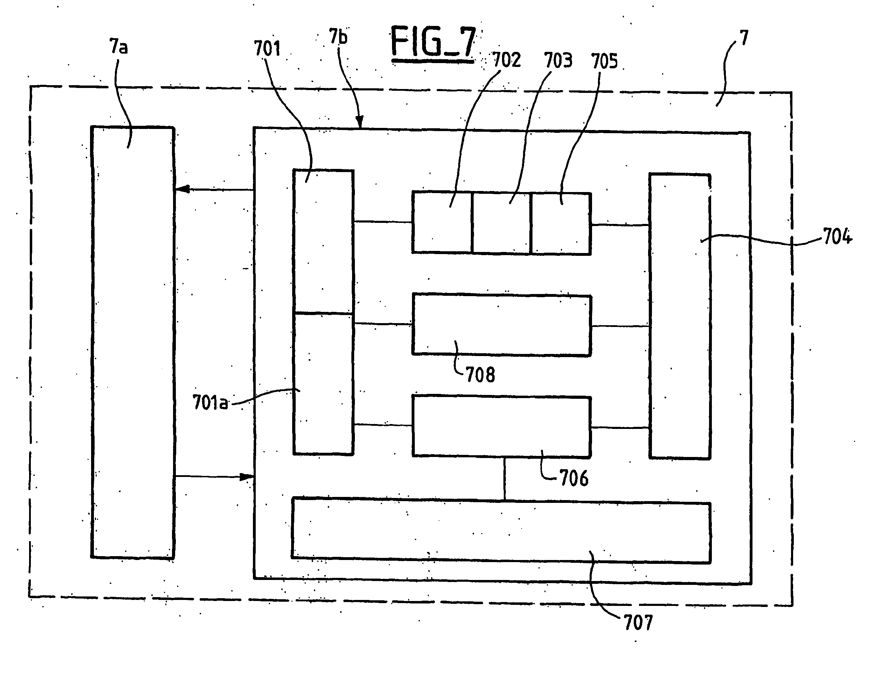

- la figure 7 qui représente un organigramme général des différentes parties du système et des différentes interactions entre lesdites parties.

Dans la variante de réalisation décrite, le procédé et le système ont pour objet de détecter la présence d'objet nouveau et relativement stationnaire pendant au moins 3 secondes. On suppose que l'objet recherché a une taille, dans l'image comprise entre deux nombres de pixels - au sens où l'objet occupe dans l'image un nombre de pixels compris dans un intervalle. Cet intervalle est déterminé de manière empirique en procédant à des essais.

Les seuils dans l'exemple décrits ont été choisis de manière à refléter les propriétés de l'objet recherché, c'est à dire la taille de l'objet dans l'image et son contraste.

On va maintenant décrire la figure 6 qui représente une vue générale du système qui permet la détection de corps en mettant en oeuvre le procédé selon la présente demande,

Le système à pour objet de détecter des corps nouveaux 1, notamment un nageur situé dans une piscine sous la surface de l'eau ou à l'interface 2. La scène 3 éclairée par des lumières non forcément contraintes.

Un ensemble de moyens de détection, notamment un capteur de type caméra vidéo 4 de type CDD, donne de la zone 3 observée où se situe le corps 1 une succession d'images vidéo à des instants successifs. Ces images sont représentées par des signaux électriques. Avantageusement un filtre polarisant 8 est mis en oeuvre pour éliminer au moins en partie les reflets de la lumière.

Des moyens de numérisation 6 (notamment une carte de numérisation des images CDD) permettent la numérisation desdits signaux afin d'obtenir des données correspondant à chaque image vidéo, notamment des valeurs de pixels

Enfin des moyens de traitement desdites données, notamment un ordinateur 7 comportant une mémoire 7a et un processeur 7b, permettent de réaliser une discrimination des corps nouveaux ainsi que cela va être maintenant décrit. Dans la mémoire 7a les données numériques d'images sont stockées. Le processeur 7b comporte des moyens d'estimation de la nature d'un corps, de la trajectoire et des changements d'attitude du corps.

Lesdits moyens d'estimation de la nature d'un corps, de la trajectoire et des changements d'attitude du corps comportant des moyens de traitement informatiques pour extraire desdites images successives des primitives et/ou des calottes peu sensibles aux conditions d'illumination et propres à être utilisées pour une discrimination efficace entre taches de lumières et corps.

On va maintenant décrire la figure 7 qui représente un organigramme général des différentes interactions entre les parties du système.

Selon une première variante de réalisation (dénommée la première branche), qui n'est exclusive de la seconde ci-après décrite, le processeur 7b dudit système comprend :
- des moyens d'association 701 pour associer à chaque pixel une ou des primitives (au sens de la présente invention),
- des premiers moyens de comptage 702, associés à une horloge 704, pour compter, à intervalles de temps réguliers dt sur une période de temps T1, pour chaque pixel et pour chacune des primitives associées audit pixel, le nombre de fois N1 où chaque primitive est réalisée.

Si le nombre de fois N1 où une primitive est réalisée est supérieur à un seuil S1, on dit que ladite primitive est habituellement réalisée pendant la période de temps T1, dans le cas contraire on dit que ladite primitive n'est pas habituellement réalisée pendant la période de temps T1.

Le processeur 7b dudit système comprenant en outre des seconds moyens de comptage 703 qui peuvent être les mêmes que les premiers moyens de comptage. Ces seconds moyens de comptage 703, associés à l'horloge 704, comptent à intervalles de temps réguliers dt pendant une période de temps T2 choisie inférieure à T1, pour chaque pixel et pour chacune des primitives associées audit pixel, le nombre de fois N2 où chaque primitive est réalisée. Si le nombre de fois N2 où ladite primitive est réalisée est supérieur à un seuil S2, on dit que ladite primitive est habituellement réalisée pendant la période de temps T2, dans le cas contraire on dit que ladite primitive n'est pas habituellement réalisée pendant la période de temps T2.

Le processeur 7b dudit système comprend en outre des moyens de discrimination 708 pour déterminer si un changement est survenu sur une primitive associée à un pixel en appliquant l'un ou l'autre des critères suivant. Les moyens de discriminations 708 déterminent :
- soit, si ladite primitive est habituellement réalisée pendant la période de temps T1 et n'est pas habituellement réalisée pendant la période de temps T2,
- soit, si ladite primitive est habituellement réalisée pendant la période de temps T2 et n'est pas habituellement réalisée pendant la période de temps T1.

Le processeur 7b du système comprend en outre des troisièmes moyens de comptage 705 qui peuvent être les mêmes que les premiers et les seconds moyens de comptage. Les troisièmes moyens de comptage 705, associés à l'horloge 704, comptent pour chaque pixel le nombre de changements N3 des primitives associées audit pixel. Si le nombre de changements N3 est supérieur à un seuil S3, notamment égal à la moitié du nombre de primitives associées audit pixel, on dit qu'un changement est survenu sur ledit pixel.

Le processeur 7b du système comprend en outre des moyens de détection 706 pour détecter si un corps nouveau est apparu en déterminant si un changement est survenu sur un ensemble connexe de pixels.

On va maintenant décrire une seconde variante de réalisation (dénommée la seconde branche). Cette seconde variante de réalisation, qui n'est pas exclusive de la première, peut être mises en oeuvre en utilisant les mêmes organes. Ils porteront dans la suite de la description les mêmes références numériques.

Selon cette seconde variante de réalisation, le processeur 7b dudit système comprend des moyens d'association 701 pour associer aux calottes une ou plusieurs caractéristiques. Le processeur 7b comprend des moyens de sélection 701a pour sélectionner les calottes dont les caractéristiques sont supérieures à un seuil. Le processeur 7b comprend également des quatrièmes moyens de comptage 702, 703, 705, associés à une horloge 704, pour compter pour chaque pixel, à intervalles de temps réguliers dt pendant une période de temps T1, le nombre de fois N1 où ledit pixel appartient à ladite calotte sélectionnée. Si le nombre de fois N1 où ledit pixel appartient à ladite calotte est supérieur à un seuil S1, on dit que ledit pixel est habituellement présent pendant la période de temps T1, dans le cas contraire on dit que ledit pixel n'est pas habituellement présent pendant la période de temps T1. Le processeur 7b dudit système comprenant en outre des cinquièmes moyens de comptage 702, 703, 705, associés à une horloge 704 pour compter, à intervalles de temps réguliers dt pendant une période de temps T2 choisie inférieure à T1, pour chaque pixel, le nombre de fois N2 où ledit pixel appartient à ladite calotte sélectionnée. Si le nombre de fois N2 où ledit pixel appartient à ladite calotte est supérieur à un seuil S2, on dit que ledit pixel est habituellement présent pendant la période de temps T2, dans le cas contraire on dit que ledit pixel n'est pas habituellement présent pendant la période de temps T2. Le processeur 7b dudit système comprend en outre des moyens de discrimination 708 pour déterminer si un changement est survenu sur un pixel en appliquant l'un ou l'autre des critères suivant. Les moyens de discrimination déterminent :
- soit, si ledit pixel est habituellement présent pendant la période de temps T1 et n'est pas habituellement présent pendant la période de temps T2,
- soit, si ledit pixel est habituellement présent pendant la période de temps T2 et n'est pas habituellement présent pendant la période de temps T1.

Le processeur 7b dudit système comprend en outre des moyens de détection 706 pour détecter si un corps nouveau est apparu en détectant si un changement est survenu sur un ensemble connexe de pixels.

Dans le cas de la première variante comme dans le cas de la seconde, le processeur 7b du système comprend en outre des moyens d'alarme 707 pour déclencher un signal d'alarme en cas de trajectoire ou de mouvement suspect dudit corps.

Dans la variante de réalisation qui sera ci-après décrite, en se référant aux figures 3a et 4a le procédé pour détecter la présence d'objet nouveau et relativement stationnaire pendant au moins 3 secondes, met en oeuvre simultanément les concepts des branches 1 et 2.

En effet, on prend comme primitives associées à un pixel (au sens de la définition explicitée ci-dessus) les deux primitives suivantes : l'appartenance à une calotte significative de type sup. et l'appartenance à une calotte significative de type inf. Pour définir l'appartenance à une calotte significative de type sup. et à une calotte significative de type inf., on prend les caractéristiques suivantes.

L'aire (le nombre de pixels de la calotte) doit être supérieure à 3 et inférieure à 10. Ainsi, on ne retient que les objets qui dans l'image ne sont ni trop petit ni trop grand. Le "volume", défini comme la valeur absolue de la somme des écarts entre la valeur de chaque pixel de la calotte et le niveau de la calotte, doit être supérieur à 6. On ne s'intéresse donc qu'aux objets de l'image, suffisamment contrastés.

On numérise, à chaque seconde, le signal produit par la caméra 4 en mettant en oeuvre, de manière connue en soi, une carte de numérisation 6, un ordinateur 7 muni d'une mémoire 7a et d'un processeur 7b. On parcourt l'ensemble des calottes sup. et des calottes inf. et l'on ne retient que les calottes significatives. Les pixels appartenant aux calottes significatives ont donc au moins une de leurs deux primitives réalisées.

Au sens de la présente variante de réalisation, une primitive est dite réalisée si et seulement si le pixel auquel la primitive est associée appartient à une calotte significative de type sup. ou à une calotte significative de type inf.

Par exemple, l'image numérisée représentée sur la figure 3a présente les calottes sup. suivantes :
- Une calotte de niveau 3 constituée de l'unique pixel dont la valeur est 4. Son aire est de 1. Son aire étant inférieure à 3, elle n'est pas significative.
- Une calotte de niveau 2 dont le bord est représenté en gras sur la figure 3 a. Son aire est de 4 et son volume de 5. Son volume étant inférieur à 6, elle n'est pas significative.

Par exemple, l'image numérisée représentée sur la figure 4a présente les calottes sup. suivantes : deux calottes de niveau 1 entourées par les deux traits en gras. L'une d'entre elle (celle de droite) a une aire de 2 pixels et n'est donc pas significative. L'autre a une aire de 8 pixels et un volume de 13. Elle est donc significative.

Il n'y a donc dans l'image représentée dans la figure 4a qu'une seule calotte sup. significative. De même, un parcourt des calottes de type inf., ne donne, dans cette même image, aucune calotte significative de type inf. Les 8 pixels entourés dans la figure 4a par le trait gras de gauche sont donc les seuls pixels ayant au moins une primitive réalisée.

On stocke en mémoire, pour chacun des pixels, l'historique de réalisation de ces primitives sur les 10 dernières secondes. A partir de cet historique, pour chacun des pixels, on compte, pour chaque primitive, les nombres de fois où elle est réalisée lors des 10 dernières secondes et lors des 3 dernières secondes. Si en un pixel, une primitive est habituellement réalisée (resp. non habituellement réalisée) lors des 10 dernières secondes mais pas majoritairement (resp. minoritairement) lors des 3 dernières secondes, on dit qu'un changement a lieu en ce pixel.

On établit ainsi, en mémoire, une carte des pixels où un changement a lieu. Un ensemble connexe de tels pixels indique la présence d'un corps nouveau, dont la taille, sur l'image, est donnée par le nombre de pixels présents dans l'ensemble.

Si la taille d'un tel ensemble dépasse 3 pixels sans dépasser 10 pixels, on a alors détecté la présence d'un corps nouveau, relativement stationnaire sur les 3 dernières secondes et dont la taille est dans l'intervalle spécifié.

## Revendications

1. Procédé pour détecter des corps (1) nouveaux dans une scène (3) éclairée par des lumières non forcément contraintes et observée par l'intermédiaire d'au moins un capteur capable de fournir une succession d'images, par exemple une caméra vidéo ;
au sens de la présente invention, par lumière non forcément contraintes on entend : des lumières produites par un éclairage artificiel ou un éclairage naturel,
ledit procédé comprenant :
- l'étape de détecter et de produire sous forme de signaux électriques, lesdites images, à des instants successifs,
- l'étape de numériser les signaux électriques obtenus et de produire des données numériques d'images, notamment des pixels, à des instants successifs,
- l'étape d'estimer la nature d'un corps (1), la trajectoire et des changements d'attitude du corps (1) ;
ladite étape pour estimer la nature d'un corps (1), la trajectoire et des changements d'attitude du corps (1) comportant l'étape d'extraire de chacune desdites images successives des primitives et/ou des calottes en distinguant les calottes de type inférieur et les calottes de type supérieur telles que définies dans la description peu sensibles aux conditions d'illumination et propres à être utilisées pour une discrimination entre taches de lumières et corps (1).

2. Procédé selon la revendication 1 dans le cas où l'étape pour estimer la nature d'un corps, la trajectoire et des changements d'attitude du corps comprend l'étape d'extraire des images successives des primitives ; ledit procédé comprenant :
- l'étape d'associer à chaque pixel une ou des primitives telles que définies dans la description ;
- l'étape de compter, à intervalles de temps réguliers dt sur une période de temps T1, pour chaque pixel et pour chacune des primitives associées audit pixel, le nombre de fois N1 où chaque primitive est réalisée ;
si le nombre de fois N1 où une primitive est réalisée est supérieur à un seuil S1, on dit que ladite primitive est habituellement réalisée pendant la période de temps T1, dans le cas contraire on dit que ladite primitive n'est pas habituellement réalisée pendant la période de temps T1 ;
ledit procédé comprenant en outre :
- l'étape de compter, à intervalles de temps réguliers dt pendant une période de temps T2 choisie inférieure à T1, pour chaque pixel et pour chacune des primitives associées audit pixel, le nombre de fois N2 où chaque primitive est réalisée ;
si le nombre de fois N2 où ladite primitive est réalisée est supérieur à un seuil S2, on dit que ladite primitive est habituellement réalisée pendant la période de temps T2, dans le cas contraire on dit que ladite primitive n'est pas habituellement réalisée pendant la période de temps T2 ;
ledit procédé comprenant en outre :
- l'étape de déterminer si un changement est survenu sur une primitive associée à un pixel en appliquant l'un ou l'autre des critères suivant :
• ladite primitive est habituellement réalisée pendant la période de temps T1 et n'est pas habituellement réalisée pendant la période de temps T2,
• ladite primitive est habituellement réalisée pendant la période de temps T2 et n'est pas habituellement réalisée pendant la période de temps T1 ;
ledit procédé comprenant en outre :
- l'étape de compter, pour chaque pixel, le nombre de changements N3 des primitives associées audit pixel ;
si le nombre de changements N3 est supérieur à un seuil S3, notamment égal à la moitié du nombre de primitives associées audit pixel, on dit qu'un changement est survenu sur ledit pixel ;
ledit procédé comprenant en outre :
- l'étape de détecter si un corps (1) nouveau est apparu en déterminant si un changement est survenu sur un ensemble connexe de pixels.

3. Procédé selon l'une quelconque des revendications 1 ou 2 ; ledit procédé comprenant en outre :
- l'étape de déclencher des moyens d'alarme en cas de trajectoire ou de mouvement suspect dudit corps (1).

4. Procédé selon la revendication 1 dans le cas où l'étape pour estimer la nature d'un corps, la trajectoire et des changements d'attitude du corps comprend l'étape d'extraire des images successives de calottes ; ledit procédé comprenant :
- l'étape d'associer auxdites calottes une ou plusieurs caractéristiques,
- l'étape de sélectionner les calottes dont les caractéristiques sont supérieures à un seuil,
- l'étape de compter pour chaque pixel, à intervalles de temps réguliers dt pendant une période de temps T1, le nombre de fois N1 où ledit pixel appartient à ladite calotte sélectionnée ;
si le nombre de fois N1 où ledit pixel appartient à ladite calotte nombre est supérieur à un seuil S1, on dit que ledit pixel est habituellement présent pendant la période de temps T1, dans le cas contraire on dit que ledit pixel n'est pas habituellement présent pendant la période de temps T1 ;
ledit procédé comprenant en outre :
- l'étape de compter, à intervalles de temps réguliers dt pendant une période de temps T2 choisie inférieure à T1, pour chaque pixel, le nombre de fois N2 où ledit pixel appartient à ladite calotte sélectionnée ;
si le nombre de fois N2 où ledit pixel appartient à ladite calotte est supérieur à un seuil S2, on dit que ledit pixel est habituellement présent pendant la période de temps T2, dans le cas contraire on dit que ledit pixel n'est pas habituellement présent pendant la période de temps T2 ;
- l'étape de déterminer si un changement est survenu sur un pixel en appliquant l'un ou l'autre des critères suivant :
• ledit pixel est habituellement présent pendant la période de temps T1 et n'est pas habituellement présent pendant la période de temps T2,
• ledit pixel est habituellement présent pendant la période de temps T2 et n'est pas habituellement présent pendant la période de temps T1 ;
ledit procédé comprenant en outre :
- l'étape de détecter si un corps (1) nouveau est apparu en détectant si un changement est survenu sur un ensemble connexe de pixels.

5. Procédé selon l'une quelconque des revendications 1 ou 3 ; ledit procédé comprenant en outre :
- l'étape de déclencher des moyens d'alarmer en cas de trajectoire ou de mouvement suspect dudit corps (1).

6. Système pour détecter des corps (1) nouveaux dans une scène (3) éclairée par des lumières non forcément contraintes et observée par l'intermédiaire d'au moins un capteur capable de fournir une succession d'images, par exemple une caméra vidéo ;
au sens de la présente invention, par lumière non forcément contraintes on entend : des lumières produites par un éclairage artificiel ou un éclairage naturel,
ledit système comprenant :
- des moyens de détections, notamment une caméra vidéo (4), pour détecter et pour produire sous forme de signaux électriques, lesdites images, à des instants successifs,
- des moyens de numérisation (6) des signaux électriques obtenus pour produire des données numériques d'images, notamment des pixels, à des instants successifs,
- des moyens d'estimation (7, 7a, 7b) de la nature d'un corps (1), de la trajectoire et des changements d'attitude du corps (1) ;
lesdits moyens d'estimation (7, 7a, 7b) de la nature d'un corps (1), de la trajectoire et des changements d'attitude du corps (1) comportant des moyens de traitement informatiques (7, 7a, 7b) pour extraire de chacune desdites images successives des primitives et/ou des calottes en distinguant les calottes de type inférieur et les calottes de type supérieur telles que définies dans la description peu sensibles aux conditions d'illumination et propres à être utilisées pour une discrimination entre taches de lumières et corps (1).

7. Système selon la revendication 6 dans le cas où les moyens d'estimation de la nature d'un corps, de la trajectoire et des changements d'attitude du corps comprend des moyens pour extraire des images successives des primitives ; ledit système comprenant :
- des moyens d'association (701) pour associer à chaque pixel une ou des primitives telles que définies dans la description ;
- des premiers moyens de comptage (702) pour compter, à intervalles de temps réguliers dt sur une période de temps T1, pour chaque pixel et pour chacune des primitives associées audit pixel, le nombre de fois N1 où chaque primitive est réalisée ;
si le nombre de fois N1 où une primitive est réalisée est supérieur à un seuil S1, on dit que ladite primitive est habituellement réalisée pendant la période de temps T1, dans le cas contraire on dit que ladite primitive n'est pas habituellement réalisée pendant la période de temps T1 ;
ledit système comprenant en outre :
- des seconds moyens de comptage (703) pour compter, à intervalles de temps réguliers dt pendant une période de temps T2 choisie inférieure à T1, pour chaque pixel et pour chacune des primitives associées audit pixel, le nombre de fois N2 où chaque primitive est réalisée ;
si le nombre de fois N2 où ladite primitive est réalisée est supérieur à un seuil S2, on dit que ladite primitive est habituellement réalisée pendant la période de temps T2, dans le cas contraire on dit que ladite primitive n'est pas habituellement réalisée pendant la période de temps T2 ;
ledit système comprenant en outre :
- des moyens de discrimination (708) pour déterminer si un changement est survenu sur une primitive associée à un pixel en appliquant l'un ou l'autre des critères suivant :
• ladite primitive est habituellement réalisée pendant la période de temps T1 et n'est pas habituellement réalisée pendant la période de temps T2,
• ladite primitive est habituellement réalisée pendant la période de temps T2 et n'est pas habituellement réalisée pendant la période de temps T1 ;
ledit système comprenant en outre :
- des troisièmes moyens de comptage (705) pour compter, pour chaque pixel, le nombre de changements N3 des primitives associées audit pixel ;
si le nombre de changements N3 est supérieur à un seuil S3, notamment égal à la moitié du nombre de primitives associées audit pixel, on dit qu'un changement est survenu sur ledit pixel ;
ledit système comprenant en outre :
- des moyens de détection (706) pour détecter si un corps (1) nouveau est apparu en déterminant si un changement est survenu sur un ensemble connexe de pixels.

8. Système selon l'une quelconque des revendications 6 ou 7 ; ledit système comprenant en outre :
- des moyens d'alarme (707) pour déclencher un signal d'alarme en cas de trajectoire ou de mouvement suspect dudit corps (1).

9. Système selon la revendication 7 dans le cas où les moyens d'estimation de la nature d'un corp, de la trajectoire et des changements d'attitude du corps comprend des moyens pour extraire des images successives des calottes ; ledit système comprenant :
- des moyens d'association (701) pour associer auxdites calottes une ou plusieurs caractéristiques,
- des moyens de sélection (701a) pour sélectionner les calottes dont les caractéristiques sont supérieures à un seuil,
- des quatrièmes moyens de comptage (702, 703, 705) pour compter pour chaque pixel, à intervalles de temps réguliers dt pendant une période de temps T1, le nombre de fois N1 où ledit pixel appartient à ladite calotte sélectionnée ;
si le nombre de fois N1 où ledit pixel appartient à ladite calotte nombre est supérieur à un seuil S1, on dit que ledit pixel est habituellement présent pendant la période de temps T1, dans le cas contraire on dit que ledit pixel n'est pas habituellement présent pendant la période de temps T1 ;
ledit système comprenant en outre :
- des cinquièmes moyens de comptage (702, 703, 705) pour compter, à intervalles de temps réguliers dt pendant une période de temps T2 choisie inférieure à T1, pour chaque pixel, le nombre de fois N2 où ledit pixel appartient à ladite calotte sélectionnée ; si le nombre de fois N2 où ledit pixel appartient à ladite calotte est supérieur à un seuil S2, on dit que ledit pixel est habituellement présent pendant la période de temps T2, dans le cas contraire on dit que ledit pixel n'est pas habituellement présent pendant la période de temps T2 ;
ledit système comprenant en outre :
- des moyens de discrimination (708) pour déterminer si un changement est survenu sur un pixel en appliquant l'un ou l'autre des critères suivant :
• ledit pixel est habituellement présent pendant la période de temps T1 et n'est pas habituellement présent pendant la période de temps T2,
• ledit pixel est habituellement présent pendant la période de temps T2 et n'est pas habituellement présent pendant la période de temps T1 ;
ledit système comprenant en outre :
- des moyens de détection (706) pour détecter si un corps (1) nouveau est apparu en détectant si un changement est survenu sur un ensemble connexe de pixels.

10. Système selon l'une quelconque des revendications 7 ou 9 ; ledit système comprenant en outre :
- des moyens d'alarme (707) pour déclencher un signal d'alarme en cas de trajectoire ou de mouvement suspect dudit corps (1).

## Claims

1. A method for detecting new objects (1) in a scene (3) illuminated by lights that are not necessarily controlled, the scene being observed by means of at least one sensor, capable of delivering a succession of images, for example a video camera;
within the meaning of the present invention, lights that are not necessarily controlled are defined as lights produced by artificial illumination or natural illumination,
the said method comprising:
- the stage of detecting and of producing the said images in the form of electrical signals at successive instants,
- the stage of digitizing the obtained electrical signals and of producing digital image data, especially pixels, at successive instants,
- the stage of storing the said digital image data,
- the stage of estimating the nature of an object (1) and the trajectory and changes in attitude of the object (1);
the said stage for estimating the nature of an object (1) and the trajectory and changes in attitude of the object (1) including the stage of extracting, from the said successive images, primitives and/or calottes which are not very sensitive to the illumination conditions and are suitable for being used for efficient discrimination between light spots and objects (1) .

2. A method according to claim 1, in the case where the stage for estimating the nature of an object (1) and the trajectory and changes in attitude of the object (1) includes the stage of extracting primitives from the said successive images; the said method comprising:
- the stage of associating a primitive or primitives within the meaning of the present invention with each pixel,
- the stage of counting, at regular time intervals dt over a time period T1, for each pixel and for each of the primitives associated with the said pixel, the number N1 of times that each primitive is materialized;
if the number N1 of times that a primitive is materialized exceeds a threshold S1, the said primitive is said to be usually materialized during the time period T1; in the opposite case the said primitive is said to be usually not materialized during the time period T1;
the said method also comprising:
- the stage of counting, at regular time intervals dt during a time period T2 chosen to be shorter than T1, for each pixel and for each of the primitives associated with the said pixel, the number N2 of times that each primitive is materialized;
- if the number N2 of times that the said primitive is materialized exceeds a threshold S2, the said primitive is said to be usually materialized during the time period T2; in the opposite case the said primitive is said to be usually not materialized during the time period T2;
the said method also comprising:
- the stage of determining whether a change has occurred in a primitive associated with a pixel, by applying one or the other of the following criteria:
• the said primitive is usually materialized during the time period T1 and is usually not materialized during the time period T2,
• the said primitive is usually materialized during the time period T2 and is usually not materialized during the time period T1.
the said method also comprising
- the stage of counting, for each pixel, the number N3 of changes in the primitives associated with the said pixel;
if the number N3 of changes exceeds a threshold S3, equal in particular to half of the number of primitives associated with the said pixel, it is said that a change has occurred in the said pixel;
the said method also comprising:
- the stage of detecting whether a new object (1) has appeared, by determining whether a change has occurred in a connected set of pixels.

3. A method according to any one of claims 1 or 2; the said method also comprising:
- the stage of tripping alarm means in the event of suspect trajectory or movement of the said object (1).

4. A method according to claim 1, in the case where the stage for estimating the nature of an object (1), the trajectory and changes in attitude of the object (1) includes the stage of extracting calottes from the said successive images; the said method comprising:
- the stage of associating one or more characteristics with the said calottes,
- the stage of selecting the calottes whose characteristics exceed a threshold,
- the stage of counting, for each pixel, at regular time intervals dt during a time period T1, the number N1 of times that the said pixel belongs to the said selected calotte;
if the number N1 of times that the said pixel belongs to the said calotte exceeds a threshold S1, the said pixel is said to be usually present during the time period T1; in the opposite case the said pixel is said to be usually not present during the time period T1;
the said method also comprising:
- the stage of counting, at regular time intervals dt during a time period T2 chosen to be shorter than T1, for each pixel, the number N2 of times that the said pixel belongs to the said selected calotte;
if the number N2 of times that the said pixel belongs to the said calotte exceeds a threshold S2, the said pixel is said to be usually present during the time period T2; in the opposite case the said pixel is said to be usually not present during the time period T2;
- the stage of determining whether a change has occurred in a pixel, by applying one or the other of the following criteria:
• the said pixel is usually present during the time period T1 and is usually not present during the time period T2,
• the said pixel is usually present during the time period T2 and is usually not present during the time period T1;
the said method also comprising:
- the stage of detecting whether a new object (1) has appeared, by detecting whether a change has occurred in a connected set of pixels.

5. A method according to any one of claims 1 to 3; the said method also comprising:
- the stage of tripping alarm means in the event of suspect trajectory or movement of the said object (1).

6. A system for detecting new objects (1) in a scene (3) illuminated by lights that are not necessarily controlled, the scene being observed by means of at least one sensor, capable of delivering a succession of images, for example a video camera;
within the meaning of the present invention, lights that are not necessarily controlled are defined as lights produced by artificial illumination or natural illumination,
the said system comprising:
- detecting means, especially a video camera (4), for detecting and for producing the said images in the form of electrical signals at successive instants,
- means (6) for digitizing the obtained electrical signals in order to produce digital image data, especially pixels, at successive instants,
- means (7, 7a, 7b) for estimating the nature of an object (1), the trajectory and changes in attitude of the object (1);
the said means (7, 7a, 7b) for estimating the nature of an object (1) and the trajectory and changes in attitude of the object (1) including information-processing means (7, 7a, 7b) for extracting, from each of the said successive images, primitives and/or calottes which are not very sensitive to the illumination conditions and are suitable for being used for efficient discrimination between light spots and objects (1).

7. A system according to claim 6, in the case where the stage for estimating the nature of an object (1) and the trajectory and changes in attitude of the object (1) includes the stage of extracting primitives from the said successive images; the said system comprising:
- associating means (701) for associating a primitive or primitives (within the meaning of the present invention) with each pixel,
- first counting means (702) for counting, at regular time intervals dt over a time period T1, for each pixel and for each of the primitives associated with the said pixel, the number N1 of times that each primitive is materialized;
if the number N1 of times that a primitive is materialized exceeds a threshold S1, the said primitive is said to be usually materialized during the time period T1; in the opposite case the said primitive is said to be usually not materialized during the time period T1;
the said system also comprising:
- second counting means (703) for counting, at regular time intervals dt during a time period T2 chosen to be shorter than T1, for each pixel and for each of the primitives associated with the said pixel, the number N2 of times that each primitive is materialized;
if the number N2 of times that the said primitive is materialized exceeds a threshold S2, the said primitive is said to be usually materialized during the time period T2; in the opposite case the said primitive is said to be usually not materialized during the time period T2;
the said system also comprising:
- discriminating means (708) for determining whether a change has occurred in a primitive associated with a pixel, by applying one or the other of the following criteria:
• the said primitive is usually materialized during the time period T1 and is usually not materialized during the time period T2,
• the said primitive is usually materialized during the time period T2 and is usually not materialized during the time period T1;
the said system also comprising:
- third counting means (705) for counting, for each pixel, the number N3 of changes in the primitives associated with the said pixel;
if the number N3 of changes exceeds a threshold S3, equal in particular to half of the number of primitives associated with the said pixel, it is said that a change has occurred in the said pixel;
the said system also comprising:
- detecting means (706) for detecting whether a new object (1) has appeared, by determining whether a change has occurred in a connected set of pixels.

8. A system according to any one of claims 6 or 7; the said system also comprising:
- alarm means (707) for tripping an alarm signal in the event of suspect trajectory or movement of the said object (1).

9. A system according to claim 7, in the case where the stage for estimating the nature of an object (1), the trajectory and changes in attitude of the object (1) includes the stage of extracting calottes from the said successive images; the said method comprising:
- associating means (701) for associating one or more characteristics with the said calottes,
- selecting means (701a) for selecting the calottes whose characteristics exceed a threshold,
- fourth counting means (702, 703, 705) for counting, for each pixel, at regular time intervals dt during a time period T1, the number N1 of times that the said pixel belongs to the said selected calotte;
if the number N1 of times that the said pixel belongs to the said calotte exceeds a threshold S1, the said pixel is said to be usually present during the time period T1; in the opposite case the said pixel is said to be usually not present during the time period T1;
the said system also comprising:
- fifth counting means (702, 703, 705) for counting, at regular time intervals dt during a time period T2 chosen to be shorter than T1, for each pixel, the number N2 of times that the said pixel belongs to the said selected calotte;
if the number N2 of times that the said pixel belongs to the said calotte exceeds a threshold S2, the said pixel is said to be usually present during the time period T2; in the opposite case the said pixel is said to be usually not present during the time period T2;
the said system also comprising:
- discriminating means (708) for determining whether a change has occurred in a pixel, by applying one or the other of the following criteria:
• the said pixel is usually present during the time period T1 and is usually not present during the time period T2,
• the said pixel is usually present during the time period T2 and is usually not present during the time period T1;
the said system also comprising:
- detecting means (706) for detecting whether a new object (1) has appeared, by detecting whether a change has occurred in a connected set of pixels.

10. A system according to any one of claims 7 to 9; the said system also comprising:
- alarm means (707) for tripping an alarm signal in the event of suspect trajectory or movement of the said object (1).

## Patentansprüche

1. Verfahren zur Erfassung neuer Körper (1) an einem Schauplatz (3), der von Lichtern erhellt ist, die nicht unbedingt vorgegeben sind, und der zumindest durch einen Sensor beobachtet wird, der in der Lage ist, eine Folge von Bildern zu liefern, wie beispielsweise eine Videokamera;
im Sinne der vorliegenden Erfindung versteht man unter nicht unbedingt vorgegebenem Licht: Lichter, die durch eine künstliche Beleuchtung oder eine natürliche Beleuchtung erzeugt werden,
wobei das Verfahren folgendes enthält:
- den Schritt zur Erfassung und Produktion der besagten Bilder in Form von elektrischen Signalen, in aufeinander folgenden Augenblicken,
- den Schritt zur Digitalisierung der erhaltenen elektrischen Signale und der Produktion digitaler Bilddaten, speziell von Bildpunkten, in aufeinander folgenden Augenblicken,
- den Schritt zur Einschätzung der Beschaffenheit eines Körpers (1), seines Bewegungsablaufes und der Änderung des Verhaltens des Körpers (1) ;
- der besagte Schritt zur Einschätzung der Beschaffenheit eines Körpers (1)), seines Bewegungsablaufes und der Änderung des Verhaltens des Körpers (1) enthält dabei den Schritt des Herausfilterns aus jedem der besagten aufeinander folgenden Bilder von Primitiven und/oder Kalotten durch die Unterscheidung zwischen unteren und oberen Kalotten, die, wie in der Beschreibung definiert, kaum empfindlich im Zusammenhang mit den Ausleuchtbedingungen, und dazu geeignet sind, als Unterscheidungsmerkmal zwischen Lichtflecken und dem Körper (1) zu dienen.

2. Verfahren nach Anspruch 1, für den Fall, dass der Schritt zur Einschätzung der Beschaffenheit eines Körpers, seines Bewegungsablaufes und der Änderung des Verhaltens des Körpers den Schritt des Herausfilterns von Primitiven aus aufeinander folgenden Bildern enthielte; das besagte Verfahren enthält dabei folgendes:
- den Schritt der Zuordnung zu jedem Bildpunkt eines Primitivs oder von Primitiven, so wie sie in der Beschreibung definiert sind;
- den Schritt des Zählens in regelmäßigen Zeitabständen, darunter in einem Zeitabschnitt T1, für jeden Bildpunkt und jeden der Primitive, die dem Bildpunkt zugeordnet sind, der Anzahl von N1 Malen, an denen jeder Primitiv erzeugt wird;
wenn die Anzahl von N1 Malen, an dem ein Primitiv erzeugt wird, über dem Grenzwert S1 liegt, sagt man, dass der besagte Primitiv gewöhnlich während des Zeitraumes T1 erzeugt wurde, während man im gegenteiligen Fall sagt, dass der besagte Primitiv gewöhnlich nicht während des Zeitraumes T1 erzeugt wurde;
das besagte Verfahren enthält darüber hinaus:
- den Schritt des Zählens in regelmäßigen Zeitabständen, darunter in einem Zeitabschnitt T2, der unter jenem von T1 liegt, für jeden Bildpunkt und jeden der Primitive, die dem Bildpunkt zugeordnet sind, der Anzahl an N2 Malen, an dem jeder Primitiv erzeugt wird;
wenn die Anzahl an N2 Malen, an dem ein Primitiv erzeugt wird, über dem Grenzwert S2 liegt, sagt man, dass der besagte Primitiv gewöhnlich während des Zeitraumes T2 realisiert wurde, während man im gegenteiligen Fall sagt, dass der besagte Primitiv gewöhnlich nicht während des Zeitraumes T2 realisiert wurde;
das besagte Verfahren enthält darüber hinaus:
- den Schritt der Bestimmung, ob bei Anwendung des einen oder anderen der folgenden Kriterien eine Änderung an einem, einem Bildpunkt zugeordneten Primitiv eingetreten ist:
• der besagte Primitiv wird gewöhnlich während des Zeitraumes T1 erzeugt, und gewöhnlich nicht während des Zeitraumes T2 erzeugt,
• der besagte Primitiv wird gewöhnlich während des Zeitraumes T2 erzeugt, und gewöhnlich nicht während des Zeitraumes T1 erzeugt;
das besagte Verfahren enthält darüber hinaus:
- den Schritt des Zählens, für jeden Bildpunkt, der Anzahl an Änderungen N3 der Primitiven, die dem besagten Bildpunkt zugeordnet sind;
wenn die Anzahl der Änderungen N3 über einem Grenzwert S3, und speziell bei der Hälfte der Anzahl an Primitiven, die diesem Bildpunkt zugeordnet sind, liegt, sagt man, dass eine Änderung an dem besagten Bildpunkt eingetreten ist;
das besagte Verfahren enthält darüber hinaus:
- den Schritt der Erfassung, ob ein neuer Körper (1) erschienen ist, durch die Bestimmung, ob an einer Einheit an verknüpften Bildpunkten eine Änderung eingetreten ist.

3. Verfahren nach irgendeinem der Ansprüche 1 oder 2 ; das besagte Verfahren enthält dabei:
- den Schritt zum Auslösen eines Alarmes für den Fall eines verdächtigen Bewegungsablaufes oder einer verdächtigen Bewegung des besagten Körpers (1).

4. Verfahren nach Anspruch 1, für den Fall, dass der Schritt zum Einschätzen der Beschaffenheit eines Körpers , seines Bewegungsablaufes und der Änderung des Verhaltens des Körpers den Schritt zum Herausfiltern von Kalotten aus aufeinander folgenden Bildern enthält; das besagte Verfahren enthält dabei:
- den Schritt der Zuordnung zu den besagten Kalotten einer oder mehrerer Eigenschaften,
- den Schritt der Auswahl jener Kalotten, deren Eigenschaften über einem Grenzwert liegen,
- den Schritt des Zählens in regelmäßigen Zeitabständen, darunter in einem Zeitabschnitt T1, für jeden Bildpunkt der Anzahl an N1 Malen, an denen der besagte Bildpunkt zur besagten ausgewählten Kalotte gehört;
wenn die Anzahl an N1 Malen, an denen der besagte Bildpunkt zur besagte Kalotte gehört, über einem Grenzwert S1 liegt, sagt man, dass der besagte Bildpunkt gewöhnlich während des Zeitraumes T1 vorhanden ist, während man im gegenteiligen Fall sagt, dass der besagte Bildpunkt während des Zeitraumes T1 gewöhnlich nicht vorhanden ist;
das besagte Verfahren enthält darüber hinaus:
- den Schritt des Zählens in regelmäßigen Zeitabständen, darunter in einem Zeitabschnitt T2, der unter jenem von T1 liegt, für jeden Bildpunkt der Anzahl an N2 Malen, an denen der besagte Bildpunkt zur besagten ausgewählten Kalotte gehört;
wenn die Anzahl an N2 Malen, an denen der besagte Bildpunkt zur besagte Kalotte gehört, über einem Grenzwert S2 liegt, sagt man, dass der besagte Bildpunkt gewöhnlich während des Zeitraumes T2 vorhanden ist, während man im gegenteiligen Fall sagt, dass der besagte Bildpunkt während des Zeitraumes T2 gewöhnlich nicht vorhanden ist;
- den Schritt zur Bestimmung, ob bei Anwendung des einen oder anderen der folgenden Kriterien eine Änderung an einem Bildpunkt eingetreten ist:
• der besagte Bildpunkt ist gewöhnlich während des Zeitraumes T1 vorhanden, und gewöhnlich während des Zeitraumes T2 nicht vorhanden,
• der besagte Bildpunkt ist gewöhnlich während des Zeitraumes T2 vorhanden, und gewöhnlich während des Zeitraumes T1 nicht vorhanden;
das besagte Verfahren enthält darüber hinaus:
- den Schritt zur Erfassung, ob ein neuer Körper (1) erschienen ist, durch die Erfassung, ob an einer Einheit an verknüpften Bildpunkten eine Änderung eingetreten ist.

5. Verfahren nach irgendeinem der Ansprüche 1 oder 3; das besagte Verfahren enthält dabei:
- den Schritt zum Auslösen eines Alarmes für den Fall eines verdächtigen Bewegungsablaufes oder einer verdächtigen Bewegung des besagten Körpers (1).

6. System zum Erfassen von neuen Körpern (1) an einem Schauplatz (3), der von Lichtern erhellt ist, die nicht unbedingt vorgegeben sind, und der zumindest durch einen Sensor beobachtet wird, der in der Lage ist, eine Folge von Bildern zu liefern, wie beispielsweise eine Videokamera;
im Sinne der vorliegenden Erfindung versteht man unter nicht unbedingt vorgegebenem Licht: Lichter, die durch eine künstliche Leuchtquelle oder eine natürliche Leuchtquelle erzeugt werden,
wobei das Systeme folgendes enthält:
- Erfassungssysteme, insbesondere eine Videokamera (4), zum Erfassen und Produzieren der besagten Bilder in Form von elektrischen Signalen, in aufeinander folgenden Augenblicken,
- Systeme zur Digitalisierung (6) der erhaltenen elektrischen Signale zur Herstellung digitaler Bilddaten, insbesondere von Bildpunkten, in aufeinander folgenden Augenblicken,
- Systeme zur Einschätzung (7, 7a, 7b) der Beschaffenheit eines Körpers (1), seines Bewegungsablaufes und der Änderung des Verhaltens des Körpers (1);
- Die Systeme zur Einschätzung (7, 7a, 7b) der Beschaffenheit eines Körpers (1) seines Bewegungsablaufes und der Änderung des Verhaltens des Körpers (1) enthalten dabei Datenverarbeitungssysteme (7, 7a, 7b) zum Herausfiltern aus jedem der besagten aufeinander folgenden Bilder von Primitiven und/ oder Kalotten durch Unterscheidung zwischen unteren und oberen Kalotten, die, wie in der Beschreibung definiert, kaum empfindlich im Zusammenhang mit den Ausleuchtbedingungen, und dazu geeignet sind, als Unterscheidungsmerkmal zwischen Lichtflecken und dem Körper (1) zu dienen.

7. System nach Anspruch 6 für den Fall, dass die Systeme zur Einschätzung der Beschaffenheit eines Körpers, seines Bewegungsablaufes und der Änderung des Verhaltens des Körpers Systeme zum Herausfiltern aus jedem der besagten aufeinander folgenden Bilder von Primitiven enthielte; das besagte System enthält dabei folgendes:
- Zuordnungssysteme (701) zum Zuordnen zu jedem der Bildpunkte eines oder mehrerer Primitive, so wie sie in der Beschreibung definiert sind;
- erste Zählsysteme (702) zum Zählen in regelmäßigen Zeitabständen, darunter in einem Zeitabschnitt T1, für jeden Bildpunkt und jeden der Primitive, die dem Bildpunkt zugeordnet sind, der Anzahl an N1 Malen, an denen jeder Primitiv erzeugt wird;
wenn die Anzahl an N1 Malen, an denen ein Primitiv erzeugt wird, über dem Grenzwert S1 liegt, sagt man, dass der besagte Primitiv gewöhnlich während des Zeitraumes T1 erzeugt wurde, während man im gegenteiligen Fall sagt, dass der besagte Primitiv gewöhnlich nicht während des Zeitraumes T1 erzeugt wurde;
das besagte System enthält darüber hinaus:
- zweite Zählmittel (703) zum Zählen in regelmäßigen Zeitabständen, darunter in einem Zeitabschnitt T2, die unter jenem von T1 liegt, für jeden Bildpunkt und jeden der Primitive, der dem Bildpunkt zugeordnet sind, der Anzahl an N2 Malen, an denen jeder Primitiv erzeugt wird;
wenn die Anzahl an N2 Malen, an denen der besagte Primitiv erzeugt wird, über dem Grenzwert S2 liegt, sagt man, dass der besagte Primitiv gewöhnlich während des Zeitraumes T2 erzeugt wurde, während man im gegenteiligen Fall sagt, dass der besagte Primitiv gewöhnlich nicht während des Zeitraumes T2 realisiert wurde;
das besagte System enthält darüber hinaus:
- Unterscheidungssysteme (708) zum Bestimmen, ob bei Anwendung des einen oder anderen der folgenden Kriterien eine Änderung an einem, einem Bildpunkt zugeordneten Primitiv eingetreten ist:
• der besagte Primitiv wird gewöhnlich während des Zeitraumes T1 erzeugt, und wird gewöhnlich nicht während des Zeitraumes T2 erzeugt,
• der besagte Primitiv wird gewöhnlich während des Zeitraumes T2 erzeugt, und wird gewöhnlich nicht während des Zeitraumes T1 erzeugt;
das besagte System enthält darüber hinaus:
- dritte Zählsysteme (705) zum Zählen, für jeden Bildpunkt, der Anzahl an Änderungen N3 der Primitiven, die dem besagten Bildpunkt zugeordnet sind;
wenn die Anzahl der Änderungen N3 über dem Grenzwert S3, und speziell bei der Hälfte der Anzahl an Primitiven, die diesem Bildpunkt zugeordnet sind, liegt, sagt man, dass eine Änderung an dem besagten Bildpunkt eingetreten ist;
das besagte System enthält darüber hinaus:
- Erfassungssysteme (706) zum Erfassen, ob ein neuer Körper (1) erschienen ist, durch die Bestimmung, ob an einer Einheit an verknüpften Bildpunkten eine Änderung eingetreten ist.

8. System nach irgendeinem der Ansprüche 6 oder 7; das besagte System enthält dabei:
- Alarmsysteme (707) zum Auslösen eines Alarms für den Fall eines verdächtigen Bewegungsablaufes oder einer verdächtigen Bewegung des besagten Körpers (1).

9. System nach Anspruch 7, für den Fall, dass die Einschätzungssysteme der Beschaffenheit eines Körpers, seines Bewegungsablaufes und der Änderung des Verhaltens des Körpers den Schritt zum Herausfiltern der Kalotten aus aufeinander folgenden Bildern enthält; das besagte System enthält dabei:
- Zuordnungssysteme (701) für die Zuordnung einer oder mehrerer Eigenschaften zu den besagten Kalotten,
- Auswahlsysteme (701a) zur Auswahl der Kalotten, deren Eigenschaften über einem Grenzwert liegen,
- vierte Zählsysteme (702, 703, 705) zum Zählen in regelmäßigen Zeitabständen, darunter in einem Zeitabschnitt T1, für jeden Bildpunkt der Anzahl an N1 Malen, an denen der besagte Bildpunkt zur besagten ausgewählten Kalotte gehört;
wenn die Anzahl an N1 Malen, an denen der besagte Bildpunkt zur besagte Kalotte gehört, über einem Grenzwert S1 liegt, sagt man, dass der besagte Bildpunkt gewöhnlich während des Zeitraumes T1 vorhanden ist, während man im gegenteiligen Fall sagt, dass der besagte Bildpunkt während des Zeitraumes T1 gewöhnlich nicht vorhanden ist;
das besagte System enthält darüber hinaus:
- fünfte Zählsysteme (702, 703, 705) zum Zählen in regelmäßigen Zeitabständen, darunter in einem Zeitabschnitt T2, der unter jenem von T1 liegt, für jeden Bildpunkt der Anzahl an N2 Malen, an denen der besagte Bildpunkt zur besagten ausgewählten Kalotte gehört;
wenn die Anzahl an N2 Malen, an denen der besagte Bildpunkt zur besagte Kalotte gehört, über einem Grenzwert S2 liegt, sagt man, dass der besagte Bildpunkt gewöhnlich während des Zeitraumes T2 vorhanden ist, während man im gegenteiligen Fall sagt, dass der besagte Bildpunkt während des Zeitraumes T2 gewöhnlich nicht vorhanden ist;
das besagte System enthält darüber hinaus:
- Unterscheidungssysteme (708) zur Bestimmung, ob bei Anwendung des einen oder anderen der folgenden Kriterien eine Änderung an einem Bildpunkt eingetreten ist:
• der besagte Bildpunkt ist gewöhnlich während des Zeitraumes T1 vorhanden, und gewöhnlich während des Zeitraumes T2 nicht vorhanden,
• der besagte Bildpunkt ist gewöhnlich während des Zeitraumes T2 vorhanden, und gewöhnlich während des Zeitraumes T1 nicht vorhanden;
das besagte System enthält darüber hinaus:
- Erfassungsmittel (706) zum Erfassen, ob ein neuer Körper (1) erschienen ist, durch die Erfassung, ob an einer Einheit an verknüpften Bildpunkten eine Änderung eingetreten ist.

10. System nach irgendeinem der Ansprüche 7 oder 9; das besagte System enthält dabei:
- Alarmsysteme (707) zum Auslösen eines Alarms für den Fall eines verdächtigen Bewegungsablaufes oder einer verdächtigen Bewegung des besagten Körpers (1).
